(19) Europäisches Patentamt

European Patent Office

Office européen des brevets

(11) **EP 1 220 491 A2**

(12) **EUROPEAN PATENT APPLICATION**

(43) Date of publication:
**03.07.2002 Bulletin 2002/27**

(51) Int Cl.7: **H04L 12/28**

(21) Application number: **01310400.5**

(22) Date of filing: **12.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Squibbs, Robert Francis**<br>**Easter Common, Bristol BS35 5RJ (GB)** |
| (30) Priority: **19.12.2000 GB 0030918**<br>**24.03.2001 GB 0107450** | (74) Representative: **Squibbs, Robert Francis et al**<br>**Hewlett-Packard Limited,**<br>**IP Section,**<br>**Building 3**<br>**Filton Road**<br>**Stoke Gifford, Bristol BS 34 8QZ (GB)** |
| (71) Applicant: **Hewlett-Packard Company**<br>**Palo Alto, CA 94304 (US)** | |

(54) **Device group discovery method and apparatus**

(57)  A sound-based group discovery method is provided for collections of local devices. One of the devices initiates the discovery method by sending out a mating sound and, via a communications transceiver such as a short-range radio transceiver, a related mating signal (step 41). Any other device picking up both the mating sound and signal becomes at least a potential group member. In a preferred embodiment, the devices receiving both the mating sound and signal respond to the initiating device (step 42) which thereupon determines an initial membership of the group and sends this to the other members (step 44). A sound connectivity check is then carried out (steps 46-48) to ensure each member can hear every other member.

Figure 3

```
41 — EMIT MATING SOUND
     AND RADIO SIGNAL

42 — RECEIVE BACK RADIO
     ACKNOWLEDGEMENTS
     AND RESTART APPEALS

43 — HANDLE RESTART APPEALS

44 — ESTABLISH INITIAL GROUP
     AND PECKING ORDER

45 — TRANSMIT INITIAL GROUP
     LIST BY RADIO

46 — RADIO TRIGGER NEXT GROUP
     MEMBER TO EMIT CONNECTIVITY
     CHECK SOUND & SIGNAL

47 — HANDLE RETRY APPEALS

48 — ALL MEMBERS TRIGGERED ?  — NO
                                YES

49 — DERIVE AND TRANSMIT
     FINAL GROUP LIST
```

EP 1 220 491 A2

## Description

### Field of the Invention

The present invention relates to the device group discovery for devices with sound connectivity.

### Background of the Invention

Voice control of apparatus is becoming more common and there are now well developed technologies for speech recognition particularly in contexts that only require small vocabularies.

However, a problem exists where there are multiple voice-controlled devices in close proximity since their vocabularies are likely to overlap giving rise to the possibility of several different devices responding to the same voice command. In fact, the problem is more general and arises wherever there are multiple devices in close proximity whose input or output overlap. What is required is some form of coordination of the devices, either by a master control arrangement (whether part of one of the devices or separate) or by autonomous self regulation by the devices according to an agreed policy. This is also true where the devices are required to interact in an ordered manner.

Coordination between devices is facilitated by first defining a device group comprising the devices to be coordinated, and arranging for the group members to know that they belong to the group. Generally, and preferably, the group will have some real world significance, such as the collection of devices present in a particular space, such as a conference room or kitchen.

Clearly, the group can be defined by human intervention to specify the group members. However, it is preferable for the group membership to be automatically determined by the devices themselves.

Accordingly, it is an object of the present invention to provide a method and apparatus for determining the members of a group of devices that are in physical proximity to each other.

### Summary of the Invention

According to a first aspect of the present invention, there is provided a group discovery method for a plurality of devices equipped with respective microphones and electromagnetic communication subsystems, wherein:

- one said device, herein the initiator device, emits both a mating sound and, via its communications subsystem, a related mating signal, one of the mating sound and mating signal being emitted no later than the other,
- any other said device receiving the mating signal via its communications subsystem seeks to relate it with a sound, corresponding to the mating sound, picked up by its microphone,

a said other device receiving both the mating signal and related mating sound, herein an initial receiving device, thereby becoming at least a potential group member.

By using the mating sound to establish which devices are nearby, it is likely that only devices in the same space will be involved, whilst the mating signal minimises the risk of extraneous sounds being taken as mating sounds and permits initial group-relevant data to be transmitted to the potential group members.

According to a second aspect of the present invention, there is provided a group determination method for a plurality of voice-controlled devices equipped with respective microphones and electric or electromagnetic communication means, wherein a said device is caused to emit a sound at the same time as sending an electric or electromagnetic signal, any other said device receiving both the sound and the signal responding to the emitting device to indicate its presence and being thereby included as a member of a group also including the emitting device.

According to a third aspect of the present invention, apparatus comprising:

- a sound emitter for emitting a mating sound;
- an electromagnetic communications subsystem for sending and receiving signals; and
- a control subsystem for causing the sending of a mating sound using the sound emitter and a related mating signal using the communications subsystem.

According to a fourth aspect of the present invention, there is provided apparatus comprising:

- a sound receiver for receiving a mating sound;
- an electromagnetic communications subsystem for sending and receiving signals; and
- a control subsystem operative upon the receipt of a mating signal via the communications subsystem and a corresponding mating sound via the sound receiver, to extract from the mating signal a group identifier.

According to a fifth aspect of the present invention, there is provided apparatus comprising:

- a sound receiver for receiving a mating sound;
- an electromagnetic communications subsystem for sending and receiving signals; and
- a control subsystem operative upon the receipt of a mating signal via the communications subsystem and a corresponding mating sound via the sound receiver, to send an acknowledgement via the communications subsystem identifying itself.

According to a sixth aspect of the present invention, there is provided apparatus comprising:

- a sound emitter for emitting a mating sound;
- a sound receiver for receiving a mating sound;
- an electromagnetic communications subsystem for sending and receiving signals;
- a first control arrangement for periodically causing the sending, in coordination, of a mating sound using the sound emitter and a mating signal using the communications subsystem; and
- a second control arrangement operative upon the receipt of a mating signal via the communications subsystem and a corresponding mating sound via the sound receiver, to send an acknowledgement via the communication subsystem identifying itself;

the second control arrangement being further operative, upon receipt of a mating signal and corresponding mating sound, to at least temporarily inhibit the first control arrangement.

## Brief Description of the Drawings

Embodiments of the present invention, will now be described, by way of non-limiting example, with reference to the accompanying diagrammatic drawings, in which:

- **Figure 1** is a diagram illustrating a room equipped with three voice-controlled devices provided with common functionality embodying the invention;
- **Figure 2** is a diagram illustrating setup and operational phases of the Figure 1 devices;
- **Figure 3** is a diagram illustrating the steps carried out by an initiator device in initiating and coordinating group discovery by the devices;
- **Figure 4** is a state diagram illustrating the operation of the non-initiator devices during the group discovery process;
- **Figure 5** is a diagram illustrating the timing measurements made during a device location discovery process carried out by the Figure 1 devices;
- **Figure 6** is a diagram illustrating the derivation of relative device location using the Figure 5 timing measurements;
- **Figure 7** is a diagram depicting a hand-held feature-mapping device;
- **Figure 8** is a diagram illustrating device announcement ordering relative to a fixed assumed user location;
- **Figure 9** is a diagram illustrating device announcement ordering taking account of user positioning; and
- **Figure 10** is a diagram illustrating device announcement ordering taking account of the location and direction of facing of the user.

## Best Mode of Carrying Out the Invention

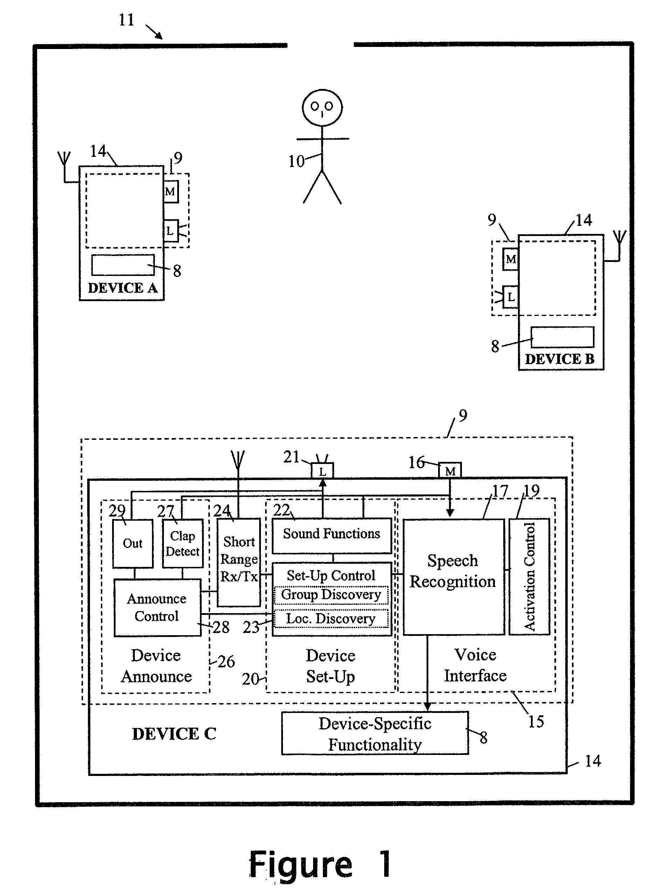

Figure 1 shows a work space 11 in which a user 10 is present. Within the space 11 are three voice-controlled devices 14 (hereinafter referred to as devices A, B and C respectively) each with different specific functionality 8 but each provided with a common set 9 of control and interface components. As shown for device C, this common set 9 of control and interface components comprises a microphone 16, a loudspeaker 21, a short-range radio transceiver 24 (such as a Bluetooth transceiver) for inter-device communication, a voice interface subsystem 15, a set-up subsystem 20, and a device announce subsystem 26.

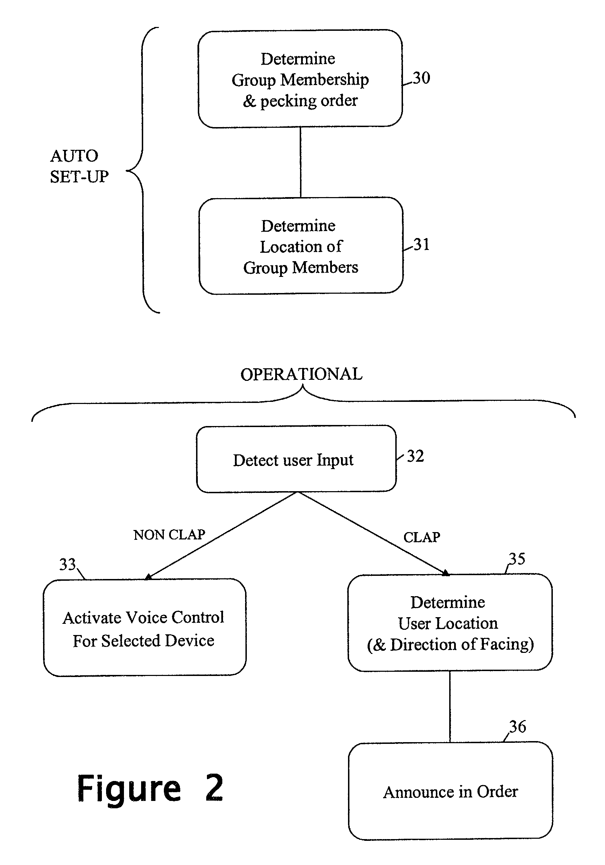

Each device 14 has an automatic set-up phase that proceeds entry into an operational mode - see Figure 2. The set-up phase involves a first stage 30 of group membership discovery and a second stage 31 of member location discovery. When a device is in its operational mode, audio input is detected (step 32) and if this input is a clap, a device announcement sequence is executed (steps 35, 36); however, if the audio input is verbal and the device concerned has been selected for activation, the verbal input is used to control the device-specific functionality 8 (step 33).

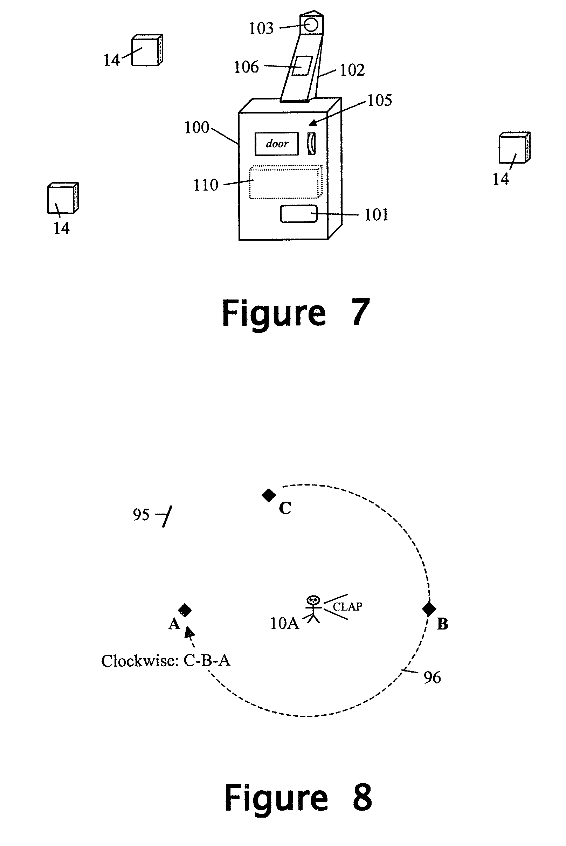

The device announcement sequence, which will be more fully described hereinafter with reference to Figures 7-9, involves the devices audibly announcing themselves to a user (step 36), the announcing being done in an ordered manner, preferably taking account of the user's location as determined in step 35.

As regards voice control of the device functionality 8, for present purposes it is sufficient to note that this is effected by the voice interface subsystem 15 of the device, this subsystem comprising an activation control block 19 for determining when the device concerned selected for activation, and a speech recognition block 17 for recognising command words in the verbal input and controlling the functionality 8 accordingly. With respect to how device selection, this can be achieved by any suitable technique including user operation of an activation button on the device, or detection of which device the user is facing at the time of speaking the command. Methods for implementing this latter selection technique are described in our co-pending UK Application No. GB 0029571.7 (visual detection of direction of facing) and UK Application No. GB 0030918.7 (audio detection of direction of facing). The specifics of how a particular device is selected are not of importance to the present invention and are therefore not further described herein.

### Group Discovery

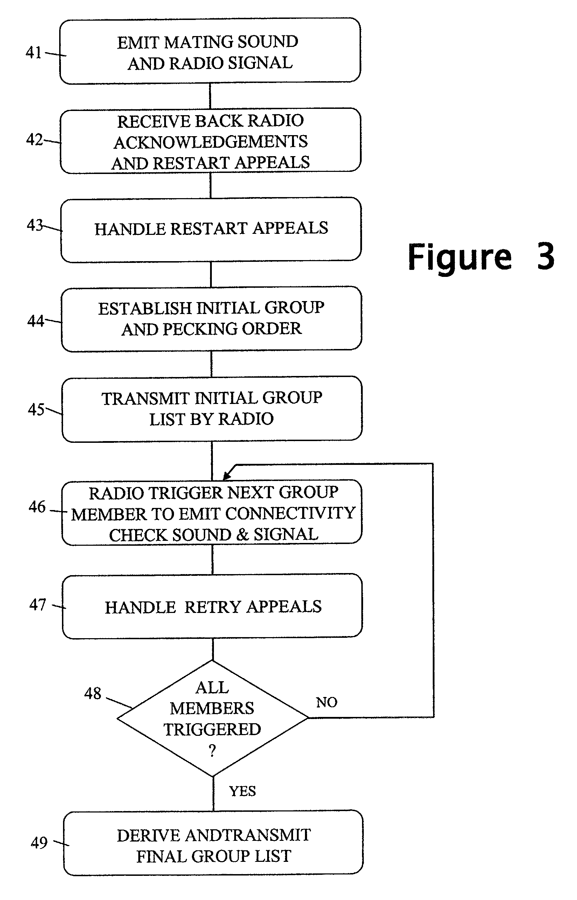

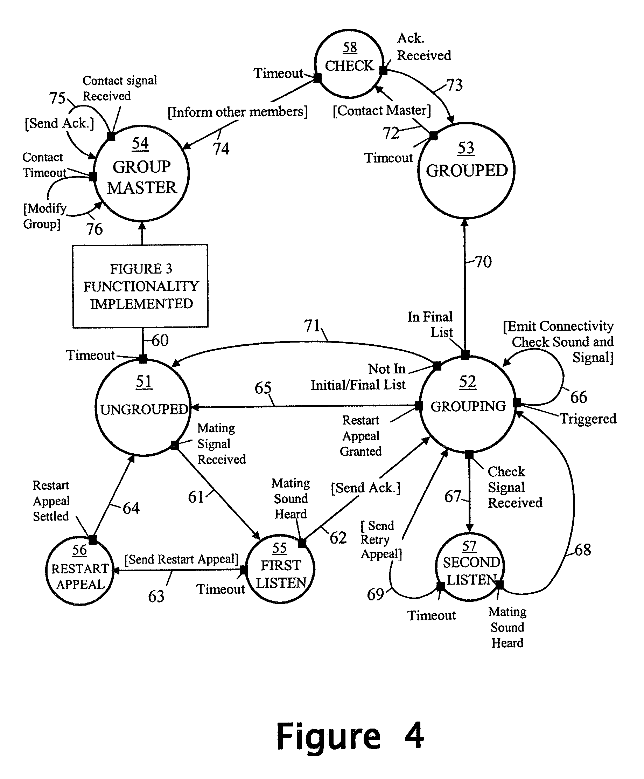

The group membership discovery step 30 of the device set-up phase will now be described with reference to Figures 3 and 4. There are several reasons why it is useful to know about device grouping. Thus, for example, in the above-mentioned methods of device selection using direction-of-facing detection, determination of which device is being selected can be facilitated by knowing what devices are present and their locations. Another example is to enable devices to be ranked so as to order their transmissions (examples of a requirement for ordered transmissions are given below with respect to the device location determination step 31 and to the device announcement process 35, 36.

Group discovery is effected by the device set-up subsystem 20 using the microphone16, loudspeaker 21 and short-range radio transceiver 24. The parts of subsystem 20 that are relevant to group membership discovery are a sound functions block 22 for emitting sounds via loudspeaker 21 and receiving sound input via microphone 16, and group-discovery control functions of a control block 23

The discovery process will first be outlined starting from a state where the devices A, B and C know nothing of each other. The control block23 of each device is operative to cause the sound functions block 22 to emit via loudspeaker 21 a distinctive "mating sound" at random periodic intervals. In coordination with (typically, but not necessarily, at the same time as) the emission of the mating sound, the control block23 causes the transceiver 24 to emit a mating signal. One device, referred to below as the initiator device, will be the first to emit its mating sound and signal. Each other device within range detects, via its short-range transceiver 24, the mating signal sent by the transceiver of the initiator device and if this signal is complemented by the receipt of the related mating sound detected by microphone 16, then the device responds to the initiator device over the short range transceiver 24; (of course, if the mating sound is sent sufficiently in advance of the mating signal, then the receiving devices receive the mating sound first and seek to match it with a later-received mating signal). The initiator device now determines what devices are within range, these devices, or a selected subset, forming an initial group membership which the initiator device communicates to the member devices.

Each device receiving the mating sound and signal from the initiator device is at least temporarily disabled from sending mating sounds and signals; however to check whether each such device is within range of each other such device, it sends a connectivity-check sound (preferably, but not necessarily, different from the mating sound) and related signal. Information about whether these connectivity-check sound-and-signal pairs are successfully exchanged between all group members is then used by the initiator device to determine a settled group membership either excluding or including (according to a predetermined policy) devices that can only hear some, but not all, group members.

Using sound proximity to define the group is beneficial as it is less likely to result in the group being spread across different rooms than if the short-range transceivers had been used for this purpose.

A more detailed description of the group discovery process will now be given with reference to Figures 3 and 4 where Figure 3 is flow chart showing the steps executed by the initiator device in effecting group determination and Figure 4 is a state diagram defining the operation of the other devices as they participate in the group discovery process. The control of the Figure 3 process and the implementation of the state diagram of Figure 4 is done by the control block 23 (typically a processor running under program control).

The first step 41 shown in Figure 3 is the emission by the initiator device of the mating sound and mating signal. Which one of the devices A, B or C takes the role of initiator device is randomly determined by their random timeout periods to first transmission of the mating sound and signal. The mating sound can, for example, be a predetermined sound of a form already known to all devices or a sound having characteristics that are detailed in the mating signal; in this latter case, the characteristics can be varied between emissions. The mating signal sent by the radio transceiver 24 of the initiator device is preferably sent at the same time as the mating sound is emitted from loudspeaker 17; however, as already indicated, the mating signal can be sent at a different time, either before or after the mating sound, though preferably in a general time relationship to the latter that is known to the other devices to enable them to relate the mating sound and signal and ignore extraneous sounds (note that the time relationship can only be generally specified in view of the significant travel time for the sound signal). Rather than using a general time of transmission to relate the mating sound and signal, the characteristics of the mating sound can be used to establish this relationship by having the mating signal carry data detailing at least one of these characteristics as already indicated; alternatively, the mating sound and mating signal can be given corresponding characteristics such as the same pattern of switching between two values of a respective parameter of the mating sound and mating signal (thus, the mating sound can have a pattern of switching between two frequencies that is matched by the pattern of switching between strings of binary ones and zeroes in the mating signal, notwithstanding that the timescales involved are likely to be very different between the two switching patterns).

Whilst the mating sound will typically be a tone combination, it could take a more complicated form such as a spoken word; in this latter case, the speech recognisers of the receiving devices can be used to recognise the mating sound word and relate it to the mating signal (for example by general time of arrival). The mating signal, as well as potentially being used to carry mating sound characteristics, passes initiator-device contact data (address or other unique identifier) for enabling the other devices to communicate with it using their radio transceivers 24. A group identifier, generated by the initiator device, can also be included in the mating signal.

Once group membership has been established, the devices take it in turn to simultaneously send their mating call and mating signal again. This time the mating signal is used as a timing mark against which the other devices can determine the time of travel of the mating call from the emitting device (it being assumed that the mating signal arrives effectively instantaneously at all devices). This enables each device to determine its distance from the emitting devices. By repeating this exercise for all devices in turn and by having the devices exchange their distance data, it becomes possible for the block 57 of each device to calculate the relative positions of all devices in the group.

A state machine for the initiator device has not been illustrated as the initiator role is more readily described in flow chart terms and an appropriate state machine can be readily derived by persons skilled in the art. However, as depicted in Figure 4, the initiator device starts off, like all the devices, in an "Ungrouped" state 51 and is then triggered by its random timeout into initiator-role related states on its way to a "Group Master" state 54 which it enters upon the group membership becoming settled (see arrow 60). The further states 52, 55, 56 and 57 shown in Figure 4 concern the operation of the other devices during the group discovery process (the main state during this process being the "Grouping" state 52), whilst the remaining states 53 and 58 relate to the operation of the non-initiator group-member devices once the group membership has been settled.

In the present embodiment, it is assuming that the initiator device causes its mating sound and signal to be emitted at the same time so that the mating signal will be received by the other devices in advance of the mating sound. Upon receipt of the mating signal, a non-initiator device transits to "First Listen" state 55 (arrow 61) where it waits the receipt of a related mating sound; if the mating signal carried data about the mating sound characteristics, this is extracted and passed to the sound functions block 22 to enable the latter to recognise the mating sound. If the mating sound is received within a timeout period (which is either of fixed duration or set in accordance with time-relationship data carried by the mating signal), then the device transits to the Grouping state 52 and sends an acknowledgement signal back to the initiator device using its radio transceiver 24 (see arrow 62 in Figure 4). However, if no mating signal is received before expiration of the timeout, the device sends a restart appeal signal to the initiator asking the initiator device to resend the mating sound and signal (this is not unreasonable since the use of the short-range radio transceivers to send the mating signal means that the initiator device nearby and failure to pick up the mating sound could have been caused by extraneous noise). Both the acknowledgement signals and the restart appeal signals include details of device identity, type and contact data.

The initiator device receives the acknowledgements and any restart appeals (step 42 in Figure 3). If there are any restart appeals, the initiator device then considers these appeals and communicates its decision to all devices that have sent it either an acknowledgement or a restart appeal (step 43). By way of example, the initiator device may be arranged to grant restart appeals if there is more than one such appeal and there have been no previous restarts, but to deny a single appeal or appeals following a restart. If a restart appeal is granted, all non-initiator devices are brought back to their Ungrouped state by the communication sent by the initiator device (see arrows 64 and 65 in Figure 4) and the mating sound and signal are resent (this is not explicitly shown in Figure 3). If a restart appeal is refused, the appealing device(s) are returned to their Ungrouped state (arrow 64) and take no further part in the grouping process, whilst the devices already in the Grouping state are left undisturbed.

After any appeals have been handled and any restart carried out, there will generally be one or more devices residing in the Grouping state, the identity of these devices being known to the initiator device. If there are no devices in the Grouping state, the initiator device will, of course, give up its attempt to form a group and returns to the Ungrouped state.

Assuming there are devices in the Grouping state at the end of step 43, the initiator device next proceeds to set the initial group membership and to rank the members of the group (step 44). The initiator device can decide not to exclude some of the devices from the group - for example, the initiator device may have been programmed only to include devices of a certain type in any group which it forms. The ranking of devices can also be done on the basis of their type; alternatively, order of reply to the mating sound can be used to set rank (this will generally correspond to a ranking based on distance from the initiator device). The initiator device next sends the initial group membership and ranking to the devices that are in their Grouping state (step 45), causing excluded devices to return to the Ungrouped state (arrow 71 in Figure 4); in fact, for the present embodiment, this step 45 is not essential since there is a later transmission of a final membership list.

The next stage of the group discovery process is for each non-initiator device that is a member of the initial group, to check its sound connectivity with other such members. This is effected by each device in turn emitting a connectivity-check sound (via its sound function block and loudspeaker 17) and a related connectivity-check signal (via its radio transceiver 24). The regulation of this process is done, in the present embodiment, by trigger signals sent by the initiator device (step 46, Figure 3); it is also possible, however, to arrange for the devices to be self regulating as regards when they send out connectivity check sounds and signals, particularly in the case where they already know the initial group composition and their ranking in the group.

In the present embodiment, the initiator device first triggers the highest-ranked non-initiator member to send its connectivity-check sound and signal (arrow 66, Figure 4). The connectivity-check sound and signal whilst preferably different from the mating sound and signal, can be related one to the other in much the same way as for the mating sound and signal. Similarly, the mating signal will include at least the identity of the sending device.

Upon a non-triggered member device receiving a connectivity-check signal from another device, it enters a "Second Listen" state 57 (arrow 67) and waits to receive the related connectivity-check sound. If the connectivity-check sound is received before the expiration of a timeout, the receiving device returns to its Grouping state 52. However, if the connectivity-check sound is not received before expiration of the timeout, then a retry appeal signal is sent by the device, via its transceiver 24, back to the initiator device (arrow 69). The initiator device is then responsible for deciding (step 47, Figure 3) whether or not to re-trigger the device that has just sent its connectivity-check sound and signal (not illustrated in Figure 3) or whether to proceed with triggering the next member device. In this latter case, the initiator device notes that the appealing device cannot hear the last-triggered member device.

As an alternative to each device sending a connectivity-check signal along with its connectivity-check sound, it is possible to use the trigger signals sent by the initiator device to indicate to the non-triggered devices that a particular device is about to send a connectivity sound. This, of course, requires the trigger signals to be sent for receipt by all the member devices, notwithstanding that only one device is designated in the signal for sending a connectivity-check sound. However, not having the devices send connectivity-check signals with their connectivity-checks sounds removes the possibility of each device specifying, in the connectivity-check signal, particular characteristics for its connectivity-check sounds.

Once all the member devices, other than the initiator device itself, have been triggered to send their connectivity-check sound (tested for in step 48, Figure 3), the initiator device derives the final (or "settled") group list taking account of the gaps in sound connectivity that have been reported in the form of the retry appeal signals. The initiator device uses a predetermined policy to decide whether to include or exclude devices that do not have full sound connectivity to all other group members. The final group list is then sent by the initiator device via its radio transceiver 24 to the devices that were initial group members. Devices that are not in the final list transit back to the Ungrouped state 65 (arrow 650 whilst those in the final list transit to the Grouped state. As for the initiator device, after effecting step 49, it resides in the Group Master state 54 (in fact, it is not essential that the initiator device takes this state and any other one member could be designated by the initiator device, or otherwise selected, to take up the Group Master state with the initiator device moving to the Grouped state).

In the foregoing, sound connectivity data concerning a particular device was sent back to the initiator device simply as retry appeals with absence of such an appeal being taken as an indication that sound connectivity existed between the most recently triggered device and the non-appealing devices. In other embodiments, the sound connectivity of a device to the other members can be arranged to be reported back to the initiator device only when present or both when present and when absent, this reporting being done either following each device being triggered or once all devices have been triggered.

Since a group member, whether the initiator device or another device, may cease functioning or be removed from the space 11, provision is made for the member devices to periodically check the presence of all members, this being most simply done by a communications check over the short-range radio transceivers. Thus, as illustrated in Figure 4, each member device which is not in the Group Master state, periodically sends a contact signal to the device that is in that state (arrow 72), the sending device thereupon moving to a "Check" state 58. If the communication check is passed as indicated by the receipt back of an acknowledgement signal sent by the device in the Group Master state (arrow 75), the device in the Check state reverts to the Grouped state 53. However, if no acknowledgement is received before expiration of a timeout, then it is assumed (possibly after a retry) that the device in the Group master state has failed or been moved and the sending device informs other group members that the device formerly occupying that state is no longer a group member 9 and moves to the Group Master state (arrow 74); alternatively, another device such as the highest-ranked device moves to the Group Master state. Conversely, if a device in the Grouped state does not send a contact signal to the device in the Group master state within a specified time, the latter device removes the former device from the member list and informs the other devices (arrow 76).

It may be noted that the foregoing presence check is done using the transceivers rather than by checking continued sound connectivity. It is, of course, possible to carry out presence checks using sounds in much the same way as the connectivity-check sounds were used.

As well as serving as a central point for presence checking, the device in the Group Master role can also be used to invite new members into the group. This is done by arranging for only the device in the Group Master state, amongst the group members, being operative to respond to a mating sound and signal received from a non-member device; the Group Master device responds, for example, by sending a conditional invitation to join, the new device being required to establish its sound connectivity to the other group members before membership is confirmed.

The Group Master device can also be made responsible for disbanding the group, though any member should be permitted to leave gracefully at any time. Furthermore, the Group Master is preferably arranged to re-start the set-up phase either as a result of user input or after expiration of a group-life period; in this case, each device receiving the new mating signal automatically ends its association with the group having the mating-signal-emitting device as Group Master. Additionally or alternatively, all devices can be reset into their Ungrouped state by a command signal sent from a user-operated control unit linked by radio with transceivers 24.

It is possible to arrange for each device to be a member of two or more groups at the same time in which case each device effectively creates a respective state machine instance for each group of which it is, or is seeking to become, a member. To avoid confusion, the mating signals of initiator devices carry a group identifier which is then included by every actual or potential member devices in all signals they send via their transceivers 24.

Many other variants are possible to the above-described group discovery method. Thus, for example, the role of the initiator device in controlling the operation of the other devices can be reduced by enabling these other devices to act in a more autonomous manner. This, of course, requires that the latter devices all have adequate information available and act in a consistent manner. The non-initiator devices can, for example, be arranged to determine for themselves initial and/or final group membership by ensuring that:

- all devices receive the same information as the initiator device did in the above-described method (i. e. the acknowledgement and/or retry-appeal signals represented by arrows 62 and 69 in Figure 4), and
- all devices operate the same selection policy where some potential group member devices are excluded.

Similarly, the devices can be arranged to individually determine the device rankings and to send their connectivity-check sounds and signals without external triggering in accordance with their rank.

The initiator device need not be included as a member of the group though, of course, generally it will be.

The group discovery method can be simplified by omitting the restart and retry appeals. Indeed, the sound connectivity checks can be omitted entirely with group membership then being determined solely on the basis of what devices can receive both the initiator mating sound and signal.

It is also possible to operate on the basis that each member device (including even the initiator device) only knows that it is a member of a specific group without knowing who the other group members are (thus, whilst each device individually discovers its own membership of the group, the overall group membership is not explicitly discovered). In this variant, the devices receiving both the mating sound and signal do not send acknowledgement signals but simply note that they belong to a group the identity of which is given in the received mating signal. For a group determined in this manner, it is not possible to determine ranking directly and this grouping method is only useful in limited situations. However, if the group members were arranged to implement the sound connectivity check described above, this would enable each device to ascertain the identity of each other group member; it may be noted that since no ranking has been previously established, two or more devices may emit their connectivity-check sounds and signals at the same time and appropriate measures will need to be taken to deal with this eventuality (for example, different frequency sounds could be used for different devices, or a collision detect and random back-off method could be used as in the IEEE 802.3 network protocol).

Although in the foregoing all devices are described as having the same group discovery functionality, it would be possible to provide the initiator device functionality in one device only and the non-initiator device functionality in all other devices; such an arrangement is not, however, preferred.

Whilst it is preferred that the initiator device sends a mating signal in respect of each mating sound emitted, it is possible that the correspondence between mating sound and mating signal is other than one to one. For example, a mating signal may only be sent simultaneously with every fourth mating sound (or, more generally, every $n^{th}$ mating sound emitted, where n is an integer), each mating sound emitted without a simultaneous mating signal being taken as related to the last sent mating signal.

Device Location Discovery

As already outlined above, the devices 14, as the second part of their set-up phase, carry out a location discovery process in which the devices determine their relative locations. This location discovery is effected using corresponding functionality of the control block 23 in conjunction with the sound functions block 22, the microphone 16, the loudspeaker 21 and transceiver 24. In general terms, location discovery is effected by measuring the distance between the devices by determining, for each device in turn, how long it takes a sound emitted by the sound functions block 22 and loudspeaker 21 of that device to reach the other two devices.

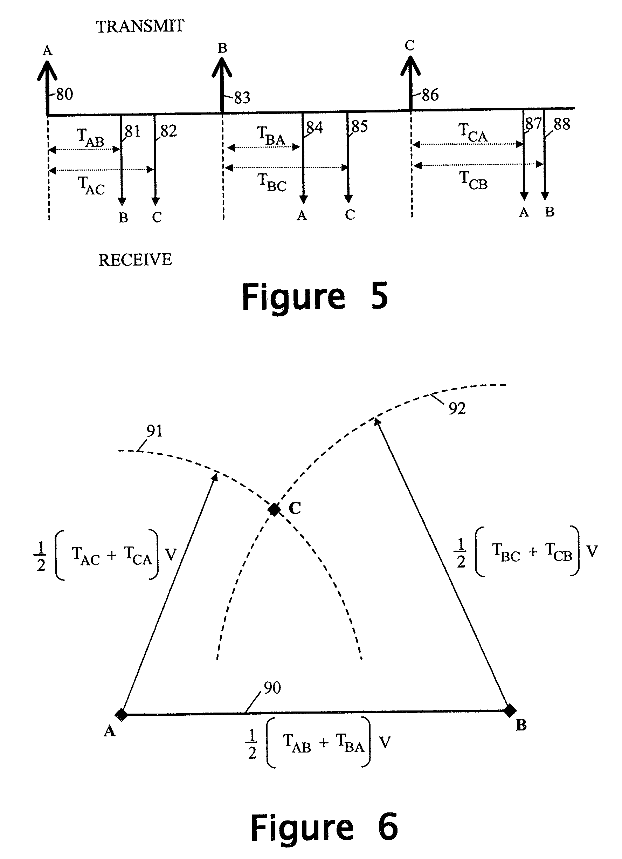

Thus, as illustrated in Figure 5, devices A, B and C emit in turn a test sound (with a sharp attack) at respective times represented by arrows 80, 83 and 86. The test sound emitted by device A is received by devices B and C at respective times represented by arrows 81 and 82, the transit time to device B being designated

$T_{AB}$ and to device C, $T_{AC}$. Similarly, the test sound emitted by device B is received by devices A and C at respective times represented by arrows 84 and 85, the transit time to device A being designated $T_{BA}$ and to device C, $T_{BC}$. Finally, the test sound emitted by device C is received by devices A and C at respective times represented by arrows 87 and 88, the transit time to device A being designated $T_{CA}$ and to device B, $T_{CB}$. Of course, the transit times $T_{AB}$ and $T_{BA}$ should be the same; similarly $T_{AC}$ and $T_{CA}$ should be equal as should $T_{BC}$ and $T_{CB}$.

It will be appreciated that in order to measure the transit times, a common time reference must be used for the time of emission and time of receipt. In this respect, internal clocks provided in the control blocks 23 of the devices are unlikely to be synchronised unless special measures have been taken to achieve this. However, since the distance between the devices is small, it is acceptable to assume that a timing reference signal sent by the test-sound emitting device over its short-range wireless transceiver 24 will be instantaneously received by the other devices. Therefore, by arranging for each device 14 to send a timing reference signal via its transceiver 24 at precisely the same time as it emits its test sound, measurement of sound transit time to each of the other devices can be achieved simply by measuring, at each receiving device, the interval between the time of receipt of the timing reference signal and the test sound (it being assumed that the processing time in the sending and receiving devices is the same for the timing reference signal as for the test sound - if this is not the case, the discrepancy is likely to be fairly constant and can be compensated for in the receiving device).

In fact, the timing reference signal does not need to be sent at the same time as the test sound. For example, it could be sent one second in advance or in arrears, the size of this time offset either being predetermined or specified in the timing reference signal. A further alternative is to have the devices determine their relative clock offsets one to another by using time-stamped signals exchanged between the devices over the short-range radio links. However, the preferred implementation is to have the sending device transmit its timing reference signal and test sound at the same time as described above.

The measured transit times (adjusted by removing any predetermined processing time element) are converted into inter-device distances using the local velocity of sound "v". These inter-device distances are then used to determine the relative locations of the devices by a process that is graphically illustrated in Figure 6 (the actual determination is done by computational calculation in a manner that will be readily appreciated by persons skilled in the art.). More particularly, points A and B representing devices A and B are placed on a base line 90 at a distance apart corresponding to:

$$\tfrac{1}{2}(T_{AB} + T_{BA})v$$

that is, the average of the two measurements between devices A and B. Point C is then located at the point of intersection of a circle 91, centred on point A, of radius:

$$\tfrac{1}{2}(T_{AC} + T_{CA})v$$

and a circle 92, centred on point B, of radius:

$$\tfrac{1}{2}(T_{BC} + T_{CB})v$$

The foregoing determination of the relative device locations can be done by all devices independently or by a specific one of the devices (such as the Group Master device). Of course, in order to derive the relative device locations, the or each device carrying out this task needs to receive transit time information from the other devices and this is done using the transceivers 24. The transceivers 24 are also used to distribute the derived relative locations where these are determined by only one device (in fact, it may not be required that all devices know these relative locations and in this case, distribution is accordingly curtailed or not performed at all).

Whilst the location derivation can be simplified by using transit times in only one direction between each device pair (with a consequent reduction in the amount of information needing to be passed to the or each device effecting location determination), this is not preferred.

Furthermore, whilst location derivation has been described above for three devices, it will be appreciated that the method can equally be applied to more devices. In this case, locating the fourth and subsequent devices can be done using three or more distance circles, one from each already-located devices - this can lead to the location of the device whose location is currently being derived, being defined by an area bounded by arcs of the distance circles (the circles having failed to intersect at a single common point). Where this happens, the location of the device concerned is taken to be, for example, the average of the minimum and maximum x and y coordinates, or as the centre of gravity of the bounded area. However, measurements which show significant discrepancies relative to the other measurements should be discarded as erroneous; such a situation can arise where a test sound reaches a device only by an indirect path involving reflections off surfaces (in this case, the transit time is not a measure of the straight line distance between emitting and receiving devices).

It will be recognised that the sending out of test sounds and timing reference signals by each device is very similar to what occurs during the group discovery process described above (where the initiator device emits a mating sound and signal and the other initial group members each subsequently emits a connectivity-check sound and signal). Indeed, it is possible to arrange for the sound-signal pairs emitted during the group discovery process also to serve as the sound-signal pairs required by the location discovery process. In this case, the devices preferably defer the transmission of transit time measurements until after group membership has been finalised. One potential drawback of using the group-discovery emissions also for location discovery is that it may be desired to repeat the location discovery process without repeating group discovery. Of course, this possibility can be handled by providing the devices with the capability of carrying out location discovery by sending out test sounds and timing reference signals independently of the group-discovery emissions, but arranging for the devices to effect initial location discovery when a group is first being set up by using the sounds and signal emitted during group discovery. Subsequent repeat of location discovery (triggered, for example, by expiration of a timeout period, by user command, or by a device sensing that it has been moved) is effected using the independent location discovery functionality.

Post set-up phase location discovery may be required only in respect of one device as would be the case if only one device has been moved. In this case, the device that has been moved is arranged to indicate to the other devices (such as by a message passed using transceivers 24) that its location needs to be determined again, the device then proceeding to emit a test sound and timing reference signal to enable the other devices to re-measure their distance from the emitting device. The aforesaid indication that a single device location is to be re-determined can be including in the timing-reference signal sent by the device concerned. The measured transit times to the non-emitting devices are then passed to the or each device effecting the location re-determination; after the new location has been derived, it replaces the former location of the device concerned held by the other devices. It may be noted that in the procedure just described, the transit time from the subject device to each of the other devices is only measured in one direction; it is, of course, possible to have each other device also emit a test sound and timing reference signal to enable the return transit time to be measured and used in location determination (where this is done, re-calculation of the location of all devices can also be done with little extra overhead).

The capability to determine the location of a single device subsequent to the location discovery process carried out in the set-up phase, can also be used to enable the devices to determine the location of a device that is not a member of the same group as the other devices. In particular, a hand-held feature-mapping device 100 (see Figure 7) can be provided that incorporates the elements 110 of the described location-discovery functionality that are required for:

(a) - emitting a test sound and timing reference signal
(b) - receiving back transit-time information and the relative locations of the existing devices, and
(c) - determining its location from the returned information and storing this information.

Elements (b) and (c) need not be provided in the feature-mapping device where the other devices 14 are used to effect the determination of the location of the feature-mapping device. As illustrated, the feature-mapping device 100 is provided with a trigger button 101 for initiating the location determination process. The sound emitter (loudspeaker) of the device 102 is located on the end of a short stalk 103 enabling it to be positioned where desired, such as in the corners of a room 11.

Preferably, the feature-mapping device 100 also has an input arrangement enabling a user to input an identity label for a space (room) feature whose location is being established using the feature-mapping device. This label can take the form of a text label selected using, for example, a scroll-down display 105, or a verbal label verbally input by the user via microphone 106. The label is stored with the corresponding location information for the feature concerned. Using the feature mapping device, it therefore becomes possible to collect location information about a desired set of room features (such as doors, windows, corners) which can subsequently be used to derive a map of the space 11 (with or without indications of the locations of the group member devices 14 used to determine the feature location information). Knowing the location of features such as the room door may also be required for other functionality of the group member devices 14 as will illustrated below in respect of an implementation of the device announcement method.

Another application of the capability for cooperating in the determination of the location of a non-member device, is in respect of discovering the location of particular equipment. Thus, if the equipment is provided with the elements needed to participate in the location determination process described above, and assuming that the equipment can be remotely triggered to initiate the location-determination process (for example, via its short-range transceiver or via a network connection), then the equipment location relative to the group can be measured and returned to the party triggering the location determination. This is most useful if the absolute location of the group is also known and communicated (this information may, for example, be kept in a database that can be accessed by group identity, the latter having been returned with the equipment's relative location).

Finally, it may be noted that provided there are at least three cooperating devices that have established their relative locations using the above-described process involving test sounds and timing references signals, the relative location of a further device (such as the feature-mapping device) can be done simply by having this further device send a test sound, there being no need also for it to transmit a timing reference signal. This is possible assuming that the times of receipt of the test sound at the other devices are accurately correlated, for example, either by the determination of the relative clock offsets between devices as already mentioned, or by having the device first to receive the test sound immediately send out a timing reference signal over its transceiver 24 to the other devices. Knowing the difference between the times of receipt of the test sound at the various devices, enables a location determination process to be carried out which effectively emulates the sending out a sound wave front from each device, at timings reversed from the test-sound receipt times, in order to determine a point where the wave fronts from all devices simultaneously coincide, this point being taken as the location of the test sound source. A fuller description of location determination effected in this manner can be found in our aforesaid UK Application No. GB 0030918.7. it will be appreciated that this location determination method can also be used to derive the location of a human user emitting a sound (for example, a hand clap) treated as a test sound (and, indeed, also as a trigger signal triggering the devices to effect location determination by this process).

Announcing the Devices

As already indicated, when the group member devices are in their operational mode, one role that the devices can usefully perform is the announcement to a user of their existence upon an appropriate trigger being generated, such as a user clapping their hands or a door sensor emitting a signal (e.g. via a short range transmitter) upon a user entering the space 11. For this role, the device announce subsystem 26 of each device 14 is provided with a trigger detection unit 27(depicted in Figure 1 as a clap detection unit 27 by way of example), an announce control block 28, and an announcement output generator 29 for producing, via loudspeaker 21, an audible device description. Preferably, the devices of a group are arranged such that either all of them announce themselves in turn in response to prompt trigger being detected, or none of them do. This can be achieved for example, by arranging for one device, such as the Group Master device, being the sole judge of whether an announce trigger has been received in which case, this device is responsible for communicating the trigger event to the other devices either directly or by commanding them to make their announcements. Alternatively, whenever any device detects an announce trigger it can inform the Group Master device which then determines, on the basis of how many devices consider a trigger to have been received, whether the devices should announce themselves (this determination could also be made by each device autonomously provided all devices are provided with the needed information and all operate the same decision rules).

For the purposes of the present description, it will be assumed that the Group Master device determines whether or not an announce trigger has been received based solely on its own observations, this device then commanding the other devices (via transceiver 24) to make their respective individual announcements as and when required to achieve a desired order of announcement (as determined by the Group master device). It is to be understood however, that autonomous operation of the devices is also possible subject to the conditions mentioned above.

In order to help the user appreciate what devices are present in the space 11, an ordering of device announcements is chosen such that, so far as the user is concerned, the progression between announcing devices proceeds either entirely in a clockwise sense or entirely in an anticlockwise sense. This helps the user visually locate the devices in the space 11. Visual location can be further facilitated by having each device flash a light source, such as an LED, mounted on the device whilst the device is announcing.

In determining the order of announcement, the Group Master device bases itself on a user position that is arrived at in one of the following ways:

(i) - The user's position is assumed to be at a particular device-relative location such as an entrance to space 11 or the centre of space 11 both of which locations can be previously determined (for example, using the above-described feature-mapping device) and stored in the memory of the Group Master device. Using an assumed location for the user's position can be employed as a default where an announce prompt is detected but user position is not available according to the methods of (ii) and (iii) below;

(ii) - A sensor at a known device-relative location detects the presence of a user and signals this (for example, via a radio link) to the Group Master device, this signal being both an announce trigger and an indicator of location. Such an arrangement can be used to trigger device announcement upon a user entering a room, the sensed user location being at the room entrance (of course, if there is more than one entrance, the identity of the entrance should be encoded in the signal sent to the Group Master device).

(iii) - The user's position is measured in some manner - for example, by using the test-sound-only location method described above where the group member devices determine the location of a test sound generated by a human. Preferably, this test sound is a handclap that also serves as the announce trigger. Any other suitable method of determining the location of the user relative to the devices 14 can alternatively be employed.

Figure 8 illustrates a situation where user location is arrived at according to (i) above - that is, the user is assumed to be located at entrance 95 (in fact, as depicted, the user 10A is positioned in the middle of the devices). Upon the user triggering device announcement by clapping, the Group Master device determines that the devices should announce in a clockwise sense relative to a user located at entrance 95. The device first to announce is, in this example, preset to be a specific device such as the Group Master device. Thus, if device C is the Group Master device, the devices announce in order C, B, A (see arrow 96). Of course, the Group Master device could equally decide to order announcements in an anticlockwise sense, that is, in order A,B,C. Because the devices may be subject to being moved within space 11, the order of announcement should be determined at each triggering even if the same assumed user position is being used as for a previous announcement sequence.

It may be noted that if device B in Figure 8 had been chosen to be the first-to-announce device, then the announcement order (if done clockwise) would have been B,A,C which for a user actually positioned at entrance 95, takes the announcement sequence from the extreme left device (device A) to the extreme right device (device C) - that is, the announcement sequence swings round at least a full semi-circle behind the user between devices A and C. This is not ideal and accordingly, unless some other factor dictates the choice of the first device to announce, it is preferred not to pre-specify which device should be first to announce but, instead, to arrange for the Group Master device (or other deciding device) to choose the first-announcing device such that the angle between the first-to-announce device and the last-to-announce device that is subtended at the user position used for order determination, is a minimum for the sense of announcement progression chosen.

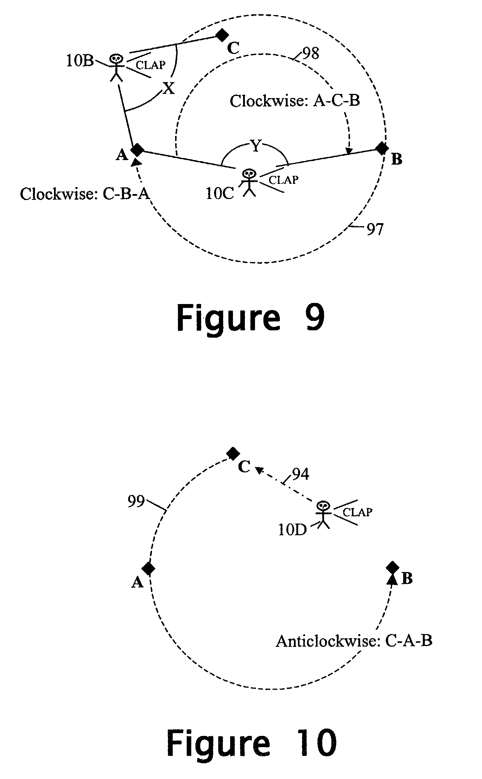

Figure 9 illustrates the application of the foregoing policy in respect of two users 10B and 10C where the order of announcement is determined based on the user's actual position. Thus, for user 10B who is located in the entrance 95, for a clockwise progression of announcement the minimum angle X subtended at the user 10B between the first and last-to-announce devices, is achieved by starting at device C, the announcement order being C, B, A as indicated by arrow 97. In contrast, in respect of user 10C positioned just below the line of devices A and B, for a clockwise progression of announcement the minimum angle Y subtended at the user between first and last-to-announce devices, is achieved by starting at device A, the announcement order being A, C, B as indicated by arrow 98.

Where the fist-to-announce device is determined by other considerations, then the sense of progression of order announcement (clockwise or anticlockwise) is chosen such that the angle subtended at the operative user position is minimised. Figure 10 illustrates this for a user 10D where the first-to-announce device is chosen on the basis of which device 14 the user is most nearly looking at when triggering device announcement by clapping. In the Figure 10 example, the user is facing device C when triggering device announcement (see arrow 94) so this device is chosen to be the first to announce. Further, the sense of announcement progression is chosen to be anticlockwise for the user position shown since this gives an angle, at user 10D, between first and last announcing devices of approximately 180 degrees as opposed to a value of around 300 degrees for a clockwise progression. The selected order of announcement is therefore C, A, B. Techniques for determining which device a user is facing are described in the afore-mentioned UK patent applications; other ways for the user to indicate which device should announce first are, of course, possible such as by pressing a specific button on the device concerned to initiate device announcement, or by means of a special spoken command interpreted by the speech recognition block 17 of a device 14 and passed on to the announce control block.

It may be noted that since the duration of each announcement is preferably not predetermined, there should preferably be some way of detecting when a device has finished announcing so as to be able to have the next announcing device begin with only a small gap from the end of the preceding announcement. This can be achieved by having the controlling device (such as the Group Master device) listen for termination of announcement as indicated by a period of silence. A more reliable approach is to arrange for the announcing device to send a signal via its transceiver 24 immediately it finishes its announcement.

Other variants are also possible to the announcement arrangement described above. For example, the order of announcement can be determined by the Group Master device and passed to all the other devices prior to the commencement of announcements, each device then determining when it is its turn to announce and announcing accordingly.

The above-described techniques for controlling announcement order can equally be used for controlling the order of presentation of other forms of human discernible output, such as visual output.

Many other variants are, of course, possible to the devices described above with reference to Figures 1 to 10. Thus, whilst short-range radio technology (in transceiver 24) has been described for inter-communicating the devices by a non-sound channel, other forms of electromagnetic communication channel can alternatively be used such as infrared transceivers and even a wired network (using, for example, coax cable, fiber-optic cable or UTP wiring cable all of which rely on electromagnetism for their operation).. It will also be appreciated that the sounds emitted by the devices can be within or outside the range of human audible sounds.

## Claims

1. A group discovery method for a plurality of devices equipped with respective microphones and electromagnetic communication subsystems, wherein:

   - one said device, herein the initiator device, emits both a mating sound and, via its communications subsystem, a related mating signal,
   - any other said device receiving the mating signal via its communications subsystem seeks to relate it with a sound, corresponding to the mating sound, picked up by its microphone,

   a said other device receiving both the mating signal and related mating sound, herein an initial receiving device, thereby becoming at least a potential group member.

2. A method according to claim 1, wherein the mating signal includes a group identifier, each said initial receiving device determining itself to be a member of a group identified by said group identifier.

3. A method according to claim 2, wherein each initial receiving device subsequently emits a connectivity-check sound and, via its communication subsystem, a related connectivity-check signal whereby to enable each group member to determine its sound connectivity to other members of the group.

4. A method according to claim 1, wherein each said initial receiving device sends an acknowledgement back to the initiator device via its communications subsystem, the initiator device subsequently using the acknowledgements it receives to determine at least an initial membership of the group.

5. A method according to claim 4, wherein the initiator device sends the initial membership via its communications subsystem to the member devices.

6. A method according to claim 1, wherein each said initial receiving device broadcasts an acknowledgement via its communications subsystem, the devices using the broadcast acknowledgements they receive to autonomously determine the membership of the group.

7. A method according to claim 5, wherein each initial receiving device that is a group member subsequently emits, at its own instigation, a connectivity-check sound and, via its communications means, a related connectivity-check signal, whereby to enable each member device to determine its sound connectivity to other member devices.

8. A method according to claim 6, wherein each initial receiving device that is a group member subsequently emits, at its own instigation, a connectivity-check sound and, via its communications means, a related connectivity-check signal, whereby to enable each member device to determine its sound connectivity to other member devices.

9. A method according to claim 4, wherein after determining group membership, the initiator device triggers, by means of trigger signals sent via its communication subsystem, each other group member to emit a connectivity-check sound whereby to enable each member device to determine its sound connectivity to other member devices.

10. A method according to claim 9, wherein each said trigger signal serves to indicate to member devices not being triggered to emit a connectivity-check sound by that signal, that a connectivity-check sound is to be emitted by a particular group member whereby to enable those members to judge when they have not heard an emitted connectivity-check sound.

11. A method according to claim 9, wherein each member device triggered to emit a connectivity-check sound also emits a connectivity-check signal via its communications subsystem whereby to enable other group members to judge when they have not heard an emitted connectivity-check sound.

12. A method according to claim 7 or claim 9, wherein each member device, other than the initiator device, sends, via its communications subsystem, confirmation and/or exception data, if any, about its sound connectivity in relation to other members as determined from the connectivity-check sounds it has received from other members; this data, where sent, being sent to the initiator device for use in deriving a settled group membership that it communicates to the constituent members.

13. A method according to claim 7 or claim 8, wherein each member device, other than the initiator device, sends, via its communications subsystem, confirmation and/or exception data, if any, about its sound connectivity in relation to other members as determined from the connectivity-check sounds it has received from other members; this data, where sent, being sent to the other member devices for individual use by each device to derive a settled group membership.

14. A method according to any one of claims 4 to 13, wherein the group members periodically check, via their communication subsystems, that all group members are still present with the non-participation of a group member in this checking resulting in eventual updating of the group membership to omit that device.

15. A method according to claim 14, wherein the periodic check of member presence is effected by having one of the group members serve as a reference device, the other group members each periodically checking their communication with the reference device, non-responsiveness of the reference device resulting in another group member taking over the role of reference member.

16. A method according to any one of claims 4 to 15, wherein the group members are ranked by the initiator device for the purpose of setting an order of priority for device transmission.

17. A method according to any one of claims 4 to 15, wherein the group members autonomously derive their individual ranks for the purpose of setting an order of priority for device transmission, the members deriving their ranks by reference to a device-specific characteristic known, for all group members, to all group members.

18. A method according to any one of the preceding claims, wherein following establishment of a group, only a predetermined one of the devices amongst the group members is operative to respond to a mating sound and signal received from a non-member device, the response by said predetermined device being at least a conditional invitation to the non-member device to join the group.

19. A method according to any one of the preceding claims, wherein the communications subsystem is one of an infrared communications subsystem, a short-range radio subsystem, and a cabled network subsystem.

20. A method according to any one of the preceding claims, wherein the mating signal carries data indicative of at least one of the following:

    - characteristics of the mating sound;
    - contact details of the communications subsystem of the initiator device;
    - a group identifier.

21. A method according to any one of the preceding claims, wherein the mating sound and mating signal are related by at least one of:

    - their general time of emission;
    - corresponding characteristics;
    - data carried by the mating signal indicative of at least one characteristic of the mating sound.

22. A method according to claim 1, wherein the initiator device is randomly determined from said plurality of devices.

23. A method according to claim 1, wherein the initiator device emits a said mating signal every $n^{th}$ mating sound emitted, where n is an integer.

24. A method according to claim 1, wherein the initiator device emits said mating sound simultaneously with emitting the said related mating signal.

25. A method according to claim 1, wherein the initiator device emits said mating sound later than the said related mating signal.

26. A group determination method for a plurality of voice-controlled devices equipped with respective microphones and electric or electromagnetic communication means, wherein a said device is caused to emit a sound at the same time as sending an electric or electromagnetic signal, any other said device receiving both the sound and the signal responding to the emitting device to indicate its presence and being thereby included as a member of a group also including the emitting device.

27. Apparatus comprising:

    - a sound emitter for emitting a mating sound;
    - an electromagnetic communications subsystem for sending and receiving signals; and
    - a control subsystem for causing the sending of a mating sound using the sound emitter and a related mating signal using the communications subsystem.

28. Apparatus according to claim 27, further comprising means for including a group identifier in the mating signal.

29. Apparatus according to claim 27, wherein the control subsystem includes group-membership determining means responsive to receiving back acknowledgement signals, via said communications subsystem, from entities that have received both the mating sound and mating signal, to determine at least an initial group comprising at least selected ones of those entities as members.

30. Apparatus according to claim 29, wherein the group-membership determining means is operative to send the initial group membership via said communications subsystem to the entities determined as members of said initial group.

31. Apparatus according to claim 29, further comprising trigger means operative, following determination of group membership by the group-membership determining means, to cause the sending of trigger signals, via said communication subsystem, to the member entities of the group to trigger each such entity to emit a connectivity-check sound whereby to enable each member entity to determine its sound connectivity to other member entities.

**32.** Apparatus according to claim 31, wherein the group-membership determining means is responsive to the receipt from entities of said at least initial group, via said communications subsystem, of confirmation and/or exception data about the sound inter-connectivity of these entities, to derive a settled group membership.

**33.** Apparatus according to claim 29, further comprising ranking means for ranking the entities of the group for the purpose of setting an order of priority for transmission by these entities.

**34.** Apparatus according to claim 27, wherein the communications subsystem is one of an infrared communications subsystem, a short-range radio subsystem, and a cabled network subsystem.

**35.** Apparatus according to claim 27, wherein the mating sound and mating signal are related by at least one of:

- their general time of emission;
- corresponding characteristics;
- data carried by the mating signal indicative of at least one characteristic of the mating sound.

**36.** Apparatus according to claim 27, wherein the control subsystem is operative to send the mating sound at random intervals.

**37.** Apparatus according to claim 27, wherein the control subsystem is operative to control the sound emitter and communications subsystem such that said mating signal is only emitted every $n^{th}$ mating sound emitted, where n is an integer.

**38.** Apparatus according to claim 27, wherein the control subsystem is operative to control the sound emitter and communications subsystem such that said mating sound is emitted simultaneously with the said related mating signal.

**39.** Apparatus according to claim 27, wherein the control subsystem is operative to control the sound emitter and communications subsystem such that said mating sound is emitted later than the said related mating signal.

**40.** Apparatus comprising:

- a sound receiver for receiving a mating sound;
- an electromagnetic communications subsystem for sending and receiving signals; and
- a control subsystem operative upon the receipt of a mating signal via the communications subsystem and a corresponding mating sound via the sound receiver, to extract from the mating signal a group identifier.

**41.** Apparatus comprising:

- a sound receiver for receiving a mating sound;
- an electromagnetic communications subsystem for sending and receiving signals; and
- a control subsystem operative upon the receipt of a mating signal via the communications subsystem and a corresponding mating sound via the sound receiver, to send an acknowledgement via the communications subsystem identifying itself.

**42.** Apparatus according to claim 41, wherein the received mating signal includes a sender address, the control subsystem being operative to send the acknowledgement specifically to the sender address taken from the mating signal whereby to enable that sender to determine a group membership based on acknowledgements it receives..

**43.** Apparatus according to claim 42, further comprising a membership subsystem for receiving group membership data via said communications subsystem and for storing this data.

**44.** Apparatus according to claim 41, wherein the control subsystem is operative to broadcast the acknowledgement, the apparatus further comprising a membership subsystem for receiving , via said communications subsystem, acknowledgements from other apparatus and for determining from these acknowledgements, a group membership.

**45.** Apparatus according to claim 43, further comprising a sound emitter, and a connectivity-check arrangement; the connectivity-check arrangement being operative to emit a connectivity-check sound via said sound emitter and a related connectivity-check signal via its communications means; the connectivity-check arrangement being further operative to receive, via the sound receiver and communications subsystem, connectivity-check sounds and related connectivity-check signals from other apparatus and to use them to check its sound connectivity with other apparatus in said group membership.

**46.** Apparatus according to claim 44, further comprising a sound emitter, and a connectivity-check arrangement; the connectivity-check arrangement being operative to emit a connectivity-check sound via said sound emitter and a related connectivity-check signal via its communications means; the connectivity-check arrangement being further operative to receive, via the sound receiver and communications subsystem, connectivity-check sounds and related connectivity-check signals from other apparatus and to use them to check its sound connectivity with other apparatus in said group membership.

47. Apparatus according to claim 42, further comprising a sound emitter, and a connectivity-check arrangement; the connectivity-check arrangement being responsive to a trigger signal received by its communications subsystem to emit a connectivity-check sound via said sound emitter; the connectivity-check arrangement being further operative to receive, via the sound receiver and communications subsystem, connectivity-check sounds and related data signals and to use them to check its sound connectivity with other apparatus in said group membership.

48. Apparatus according to claim 47, wherein said related data signals are trigger signals sent to other apparatus.

49. Apparatus according to claim 47, wherein the connectivity-check arrangement is operative to emit connectivity-check signal as well as said connectivity-check sound, said related data signals being connectivity-check signals emitted by other apparatus.

50. Apparatus according to claim 45 or claim 47, wherein the connectivity-check arrangement is operative to send, via said communications subsystem, confirmation and/or exception data, if any, about its sound connectivity in relation to other group members; this data, where sent, being sent to said sender whereby to enable the latter to derive a settled group membership.

51. Apparatus according to claim 45 or claim 46, wherein the connectivity-check arrangement is operative to send, via said communications subsystem, confirmation and/or exception data, if any, about its sound connectivity in relation to other group members; this data, where sent, being sent to the other member devices for individual use by each device to derive a settled group membership.

52. Apparatus according to any one of claims 41 to 51, wherein the communications subsystem is one of an infrared communications subsystem, a short-range radio subsystem, and a cabled network subsystem.

53. Apparatus according to any one of claims 41 to 52, wherein the mating sound and mating signal are related by at least one of:

- their general time of emission;
- corresponding characteristics;
- data carried by the mating signal indicative of at least one characteristic of the mating sound.

54. Apparatus comprising:

- a sound emitter for emitting a mating sound;
- a sound receiver for receiving a mating sound;
- an electromagnetic communications subsystem for sending and receiving signals;
- a first control arrangement for periodically causing the sending of a mating sound using the sound emitter and a related mating signal using the communications subsystem; and
- a second control arrangement operative upon the receipt of a mating signal via the communications subsystem and a corresponding mating sound via the sound receiver, to send an acknowledgement via the communication subsystem identifying itself;

the second control arrangement being further operative, upon receipt of a mating signal and corresponding mating sound, to at least temporarily inhibit the first control arrangement.

Figure 1

AUTO SET-UP

Determine
Group Membership
& pecking order ⌐30

Determine
Location of
Group Members ⌐31

OPERATIONAL

Detect user Input ⌐32

NON CLAP

CLAP

33

35

Activate Voice Control
For Selected Device

Determine
User Location
(& Direction of Facing)

36

# Figure 2

Announce in Order

## Figure 3

41 — EMIT MATING SOUND
AND RADIO SIGNAL

42 — RECEIVE BACK RADIO
ACKNOWLEDGEMENTS
AND RESTART APPEALS

43 — HANDLE RESTART APPEALS

44 — ESTABLISH INITIAL GROUP
AND PECKING ORDER

45 — TRANSMIT INITIAL GROUP
LIST BY RADIO

46 — RADIO TRIGGER NEXT GROUP
MEMBER TO EMIT CONNECTIVITY
CHECK SOUND & SIGNAL

47 — HANDLE RETRY APPEALS

48 — ALL
MEMBERS
TRIGGERED
?

NO

YES

49 — DERIVE ANDTRANSMIT
FINAL GROUP LIST

Figure 4

TRANSMIT

RECEIVE

# Figure 5

$$\frac{1}{2}\left[T_{AC} + T_{CA}\right]V \qquad \frac{1}{2}\left[T_{BC} + T_{CB}\right]V$$

$$\frac{1}{2}\left[T_{AB} + T_{BA}\right]V$$

# Figure 6

# Figure 7

# Figure 8

**Figure 9**

**Figure 10**